# EUROPEAN PATENT APPLICATION

(11) **EP 2 031 685 A1**
(43) Date of publication of application: **04.03.2009**
(21) Application number: 08163140.0
(22) Date of filing: 28.08.2008
(51) Int. Cl.: H01M 4/92, H01M 8/10, B22F 9/24

(54) **Cathode Catalyst, Method for Preparing the Same, Membrane-Electrode Assembly and Fuel Cell System Including the Same**

(30) Priority: 31.08.2007 KR 20070088351
(71) Applicant: Samsung SDI Co., Ltd., Suwon-si, Gyeonggi-do (KR)
(72) Inventor: Alexandrovichserov, Alexey c/o Legal & IP Team, Yeongtong-gu Suwon-si Gyeonggi-do (KR); Kwak, Chan c/o Legal & IP Team, Yeongtong-gu Suwon-si Gyeonggi-do (KR); Shin, Soon-Cheol c/o Legal & IP Team, Yeongtong-gu Suwon-si Gyeonggi-do (KR)
(74) Representative: Killin, Stephen James

(57) **Abstract**

A cathode catalyst for a fuel cell includes PdM where M is a metal selected from the group consisting of Mn, Fe, Co, Cu, and combinations thereof. The average distance between the Pd atoms ranges from 2.72 to 2.73Å, the average distance between the Pd and M atoms ranges from 2.63 to 2.67Å, and the average distance between the M atoms ranges from 2.63 to 2.67Å. The cathode catalyst is relatively cheaper but has excellent activity compared with a Pt catalyst.
A method for preparing a cathode catalyst for a fuel cell comprising preparing a precursor solution by adding a Pd precursor and a M precursor to a solvent, reducing the precursor solution by adding a reducing agent thereto, preparing a powder by evaporating the solvent, drying the powder and firing it.

## Description

The present invention relates to a cathode catalyst for a fuel cell, a method of preparing the same, a membrane-electrode assembly for a fuel cell including the cathode catalyst, and a fuel cell system including the membrane-electrode assembly. More particularly, the present invention relates to a low-cost cathode catalyst having high catalytic activity compared to a Pt catalyst, a method of preparing the cathode catalyst, a membrane-electrode assembly including the same, and a fuel cell system including the membrane-electrode assembly.

A fuel cell is a power generation system for producing electrical energy through an electrochemical redox reaction of an oxidant and hydrogen included in a hydrocarbon-based material such as methanol, ethanol, or natural gas. Such a fuel cell is a clean energy source that can replace fossil fuels. A fuel cell includes a stack composed of unit cells, and produces various ranges of power output. Since the fuel cell has a four to ten times higher energy density than a small lithium battery, it has been highlighted as a small portable power source.

Representative exemplary fuel cells include a polymer electrolyte membrane fuel cell (PEMFC) and a direct oxidation fuel cell (DOFC). The direct oxidation fuel cell includes a direct methanol fuel cell that uses methanol as a fuel.

The polymer electrolyte fuel cell has an advantage of high energy density and high power, but has problems in the need to carefully handle hydrogen gas and the requirement of accessory facilities such as a fuel reforming processor for reforming methane or methanol, natural gas, and the like in order to produce hydrogen as the fuel gas.

In contrast, a direct oxidation fuel cell has lower energy density than that of the polymer electrolyte fuel cell, but has the advantages of easy handling of the polymer electrolyte fuel cell, a low operation temperature, and no need for additional fuel reforming processors.

In the above-mentioned fuel cell system, a stack that generates electricity substantially includes several to scores of unit cells stacked adjacent to one another, and each unit cell is formed of a membrane-electrode assembly (MEA) and a separator (also referred to as a bipolar plate). The membrane-electrode assembly is composed of an anode and a cathode that are separated by a polymer electrolyte membrane.

In a fuel cell, a fuel is supplied to an anode and adsorbed into catalysts of the anode, and then oxidized to produce protons and electrons. The electrons are transferred into a cathode via an external circuit, and the protons are transferred into the cathode through the polymer electrolyte membrane. In addition, when an oxidant is supplied to the cathode, the oxidant, protons, and electrons are reacted on catalysts of the cathode to produce electricity along with water.

According to a first aspect of the present invention, there is provided a cathode catalyst for a fuel cell that includes PdM, where M is a metal selected from the group consisting of Mn, Fe, Co, Cu, and combinations thereof. The average distance between the Pd atoms ranges from 2.72 to 2.73Å, the average distance between the Pd and M atoms ranges from 2.63 to 2.67Å, and the average distance between the M atoms ranges from 2.63 to 2.67Å.

In respective embodiments of the present invention, the average distance between the Pd atoms ranges from 2.723 to 2.727Å, the average distance between the Pd and M atoms ranges from 2.64 to 2.66Å, and the average distance between the M atoms ranges from 2.64 to 2.66Å.

The atomic ratio of the Pd to the M may range from 5 to 95 through 95 to 5. In one embodiment, the atomic ratio of the Pd and M ranges from 20 to 80 through 75 to 25.

The PdM may not be supported on a carrier.

The PdM may have a particle diameter of a nano size. It can have a particle diameter of 1 to 20 nm or 1 to 5 nm.

According to a second aspect of the present invention, there is provided a method of manufacturing a cathode catalyst for a fuel cell including preparing a precursor solution by adding Pd and M precursors (herein, the M precursor is a metal element precursor selected from the group consisting of a Mn precursor, a Fe precursor, a Co precursor, a Cu precursor, and combinations thereof) to a solvent, reducing the precursor solution by adding a reducing agent thereto, preparing a powder by evaporating a solvent in the reduced precursor solution, drying the powder, and firing the dried powder.

The Pd precursor may be selected from the group consisting of Pd nitrate, a Pd halide, Pd acetate, hydrates thereof, and combinations thereof. The Mn precursor may be selected from the group consisting of Mn nitrate, a Mn halide, Mn acetate, hydrates thereof, and combinations thereof. The Fe precursor may be selected from the group consisting of Fe nitrate, a Fe halide, Fe acetate, hydrates thereof, and combinations thereof. The Co precursor may be selected from the group consisting of Co nitrate, a Co halide, Co acetate, hydrates thereof, and combinations thereof. The Cu precursor may be selected from the group consisting of Cu nitrate, a Cu halide, Cu acetate, hydrates thereof, and combinations thereof.

The solvent may be selected from the group consisting of water, methanol, ethanol, acetone, and combinations thereof.

The reducing agent may be selected from the group consisting of hydrazine, sodium borohydride, dimethylamine borane, diethylamine borane, sodium hypophosphite, and combinations thereof.

The evaporation of a solvent from the reduced precursor solution can be performed at a temperature ranging from 0 to 30 °C. The drying of a powder can be performed at a temperature ranging from 80 to 150 °C. The dried powder may be fired at a temperature ranging from 150 to 250 °C for 2 to 5 hours.

According to a third aspect of the present invention, there is provided a membrane-electrode assembly for a fuel cell including an anode and a cathode facing each other and a polymer electrolyte membrane interposed therebetween. The cathode includes the cathode catalyst.

According to a fourth aspect of the present invention, there is provided a fuel cell system that includes an electricity generating element, which includes a membrane-electrode assembly and a separator positioned at each side of the membrane-electrode assembly, a fuel supplier that supplies the electricity generating element with a fuel, and an oxidant supplier that supplies the electricity generating element with an oxidant.

The cathode catalyst is relatively cheaper and has excellent activity compared with a Pt catalyst.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIGURE 1 is a schematic cross-sectional view showing a membrane-electrode assembly according to an embodiment of the present invention;
FIGURE 2 is a schematic diagram showing the structure of a fuel cell system according to another embodiment of the present invention; and
FIGURES 3 to 5 are respectively graphs showing MFT (modulus of Fourier transform) results of the catalysts according to Example 1 and Comparative Example 2.

A fuel cell is a power generation system for generating electrical energy through oxidation of a fuel and reduction of an oxidant. The oxidation of the fuel occurs at an anode, while the reduction of the oxidant occurs at a cathode.

Both of the anode and the cathode include a catalyst layer that includes a catalyst to promote oxidation of the fuel and reduction of the oxidant. The anode catalyst layer representatively includes platinum-ruthenium as a catalyst, while the cathode catalyst layer may include platinum as a catalyst. However, platinum as a cathode catalyst has a problem of having low selectivity for reduction of an oxidant. It can also be depolarized by a fuel that crosses over toward a cathode through an electrolyte membrane, and is thereby deactivated, in a direct oxidation fuel cell. Therefore, attention has been paid to another catalyst that can replace platinum.

The cathode catalyst according to the present invention in its first aspect includes PdM, wherein M is a metal selected from the group consisting of Mn, Fe, Co, Cu, and combinations thereof. The average distance between the Pd atoms ranges from 2.72 to 2.73 Å. In one embodiment, it ranges from 2.723 to 2.727 Å. The average distance between the Pd and M atoms ranges from 2.63 to 2.67 Å. In one embodiment, it ranges from 2.64 to 2.66 Å. The average distance between the M atoms ranges from 2.63 to 2.67 Å. In one embodiment, it ranges from 2.64 to 2.66 Å.

In the PdM, Pd is cheaper than Pt, and has similar physical and chemical property to Pt, which is conventionally used as a cathode catalyst for a fuel cell. In addition, the metal such as Mn, Fe, Co, and Cu can provide electrons participating in reduction of an oxidant at a cathode of a fuel cell. Accordingly, when the Pd and M are alloyed, they can increase activity for reduction of an oxidant.

An atomic ratio of Pd to M may be 5 to 95 through 95 to 5 (from 5:95 to 95:5). In one embodiment of the present invention, the atomic ratio of Pd to M is 20 to 80 through 75 to 25. If the amounts of Pd and M are out of the atomic ratio of 5 to 95 through 95 to 5, activity of a PdM catalyst for reduction of oxidant may decrease.

The PdM may not be supported on a carrier. The PdM can have better activity when it is used as a black catalyst not supported on a carrier than when it is supported on a carrier.

The PdM may have a particle diameter in a nano size. It may have a particle diameter of 1 to 20 nm or 1 to 5 nm depending on an embodiment of the present invention. It is difficult to prepare PdM having a particle diameter of smaller than 1 nm. When it has a particle diameter of larger than 20 nm, activity for reduction of an oxidant may decrease.

According to the present invention in its second aspect, there is provided a method of preparing a cathode catalyst for a fuel cell, which includes steps of preparing a precursor solution by dissolving Pd and M precursors (herein, the M precursor may be a metal element precursor selected from the group consisting of a Mn precursor, a Fe precursor, a Co precursor, a Cu precursor, and combinations thereof) in a solvent, reducing the precursor solution by adding a reducing agent thereto, preparing a powder by evaporating the solvent from the reduced precursor solution, drying the powder, and firing the powder.

In particular, a precursor solution is prepared by adding Pd and M precursors to a solvent. Herein, the M precursor is a metal element precursor selected from the group consisting of a Mn precursor, a Fe precursor, a Co precursor, a Cu precursor, and combinations thereof.

The Pd precursor may be selected from the group consisting of Pd nitrate, a Pd halide, Pd acetate, hydrates thereof, and combinations thereof. The Mn precursor may be selected from the group consisting of Mn nitrate, a Mn halide, Mn acetate, hydrates thereof, and combinations thereof. The Fe precursor may be selected from the group consisting of Fe nitrate, a Fe halide, Fe acetate, hydrates thereof, and combinations thereof. The Co precursor may be selected from the group consisting of Co nitrate, a Co halide, Co acetate, hydrates thereof, and combinations thereof. The Cu precursor may be selected from the group consisting of Cu nitrate, a Cu halide, Cu acetate, hydrates thereof, and combinations thereof. The halide may appropriately include chlorine.

The solvent may be selected from the group consisting of water, methanol, ethanol, acetone, and combinations thereof.

Then, a reducing agent is added to the precursor solution for reduction. The reducing agent may be selected from the group consisting of hydrazine, sodium borohydride, dimethylamine boride, diethylamine boride, sodium hypophosphite, and combinations thereof. Also, it may include hydrazine or sodium borohydride.

Next, a powder is prepared by evaporating a solvent from the reduced precursor solution. The evaporation may be performed at a temperature ranging from 0 to 30 °C. When the evaporation is performed at a temperature of lower than 0 °C, the solvent may be evaporated too slowly. When it is performed at a temperature of higher than 30 °C, a powder may be clustered.

Then, the powder is dried. The drying may be performed at a temperature ranging from 80 to 150 °C. When the powder is dried at a temperature of lower than 80 °C, part of a reducing agent may remain non-reacted. When it is dried at a temperature of higher than 150 °C, particles may have an increased size.

Then, the powder is fired. The firing may be performed at a temperature ranging from 150 to 250 °C for 2 to 5 hours. When the powder is fired at a temperature of lower than 150 °C, the precursor may not be completely decomposed. When it is fired at a temperature of higher than 250 °C, a powder may be clustered. When the firing is performed for shorter than 2 hours, the precursor may not be completely decomposed. When it is performed for longer than 5 hours, a powder may be clustered. In addition, the firing may be performed under a reduction atmosphere. The reduction atmosphere may be a hydrogen atmosphere or a hydrogen/nitrogen atmosphere.

According to the present invention in its third aspect, there is provided a membrane-electrode assembly for a fuel cell, which includes an anode, a cathode facing the anode, and a polymer electrolyte membrane interposed between the anode and the cathode. The cathode includes the cathode catalyst prepared according to the present invention in its first aspect.

According to the present invention in its fourth aspect, there is provided a fuel cell system, which includes an electricity generating element, a fuel supplier that supplies a fuel to the electricity generating element, and an oxidant supplier that supplies an oxidant to the electricity generating element. The electricity generating element includes a membrane-electrode assembly and a separator positioned at each side of the membrane-electrode assembly. The electricity generating element generates electricity through oxidation of a fuel and reduction of an oxidant. The fuel supplier supplies the electricity generating element with a fuel including hydrogen, and the oxidant supplier supplies the electricity generating element with an oxidant. The fuel includes liquid or gaseous hydrogen, or a hydrocarbon-based fuel such as methanol, ethanol, propanol, butanol, or natural gas. The oxidant may generally include oxygen but can be pure oxygen or air. However, the fuel and oxidant are not limited thereto.

In the following detailed description, only certain exemplary embodiments of the present invention have been shown and described, simply by way of illustration. As those skilled in the art would realize, the described embodiments may be modified in various different ways, all without departing from the spirit or scope of the present invention.

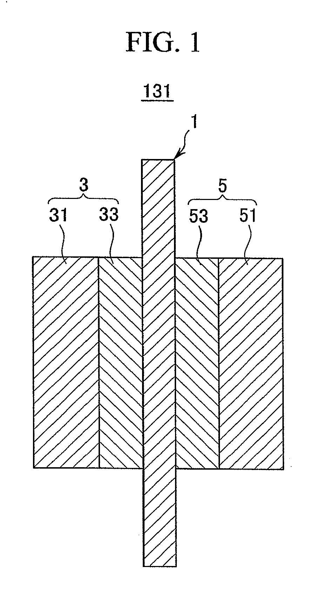

FIGURE 1 is a schematic cross-sectional view showing a membrane-electrode assembly 131 constructed as one embodiment of the present invention. The membrane-electrode assembly 131 will be described in detail with reference to FIGURE 1.

The membrane-electrode assembly 131 generates electricity through fuel oxidation and oxidant reduction, and one or more membrane-electrode assemblies constitute a stack.

At a cathode catalyst layer 53 of a cathode 5, an oxidant is reduced. The cathode catalyst has high activity and selectivity for reduction of an oxidant, and thus can effectively improve performance of the cathode 5, and thereby the membrane-electrode assembly 131.

At an anode catalyst layer 33 of an anode 3, a fuel is oxidized, and a general platinum-based catalyst is included in the anode catalyst layer 33 to facilitate the reaction. The platinum-based catalyst may include at least one selected from the group consisting of platinum, ruthenium, osmium, platinum-ruthenium alloys, platinum-osmium alloys, platinum-palladium alloys, platinum-M alloys (where M is a transition element selected from the group consisting of Ga, Ti, V, Cr, Mn, Fe, Co, Ni, Cu, Zn, Sn, Mo, W, Rh, Ru, and combinations thereof), and combinations thereof.

Even though the anode and cathode may include the same catalyst, CO-tolerant platinum-ruthenium alloy catalysts may be suitably used as the anode catalyst since CO can poison an anode catalyst. More specifically, non-limiting examples of the platinum-based catalyst are selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and combinations thereof. This metal catalyst may be used in a form of a metal itself (black catalyst) or one supported in a carrier. The carrier may include carbon such as graphite, denka black, ketjen black, acetylene black, carbon nanotubes, carbon nanofiber, carbon nanowire, carbon nanoballs, or activated carbon, or an inorganic particulate such as alumina, silica, zirconia, or titania. Carbon is generally used.

The catalyst layers 33 and 53 of the anode 3 and the cathode 5 may include a binder. The binder may be a proton conductive polymer resin having a cation exchange group selected from the group consisting of a sulfonic acid group, a carboxylic acid group, a phosphoric acid group, a phosphonic acid group, and derivatives thereof at its side chain.

Non-limiting examples of the polymer include at least one proton conductive polymer selected from the group consisting of perfluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers, and polyphenylquinoxaline-based polymers.

In one embodiment, the proton conductive polymer is at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), and poly(2,5-benzimidazole).

The binder may be used singularly or in combination. They may be used along with non-conductive polymers to improve adhesion to the polymer electrolyte membrane. The binder may be used in a controlled amount to adapt itself to the purpose.

Non-limiting examples of the non-conductive polymers include polytetrafluoroethylene (PTFE), tetrafluoroethylene-hexafluoropropylene copolymers (FEP), tetrafluoroethylene-perfluoro alkyl vinylether copolymers (PFA), ethylene/tetrafluoroethylene (ETFE), chlorotrifluoroethylene-ethylene copolymers (ECTFE), polyvinylidenefluoride, polyvinylidenefluoride-hexafluoropropylene copolymers (PVdF-HFP), dodecylbenzenesulfonic acid, sorbitol, and combinations thereof.

The electrode substrates 31 and 51 of the anode 3 and the cathode 5 provide paths for transferring the fuel and the oxidant to the catalyst layers 33 and 53. For the electrode substrates 31 and 51, a conductive substrate can be used. For example, a carbon paper, a carbon cloth, a carbon felt, or a metal cloth (a porous film including a metal cloth fiber or a metalized polymer fiber) can be used for the conductive substrate, but the material is not limited thereto.

The electrode substrates 31 and 51 may be treated with a fluorine-based resin to be water-repellent to prevent deterioration of diffusion efficiency caused by water generated during operation of a fuel cell. The fluorine-based resin may include polytetrafluoroethylene, polyvinylidene fluoride, polyhexafluoro propylene, polyperfluoroalkylvinylether, polyperfluoro sulfonylfluoride alkoxyvinyl ether, fluorinated ethylene propylene, polychlorotrifluoro ethylene, or copolymers thereof, but is not limited thereto.

In addition, a microporous layer (MPL, not shown) can be added between the aforementioned electrode substrates 31 and 51 to increase reactant diffusion effects. The microporous layer generally includes conductive powders with a particular particle diameter. The conductive material may include, but is not limited to, carbon powder, carbon black, acetylene black, activated carbon, carbon fiber, fullerene, nano-carbon, or combinations thereof. The nano-carbon may include a material such as carbon nanotubes, carbon nanofiber, carbon nanowire, carbon nanohorns, carbon nanorings, or combinations thereof.

The microporous layer is formed by coating the conductive substrate with a composition including a conductive powder, a binder, and a solvent. The binder may include, but is not limited to, polytetrafluoroethylene, polyvinylidenefluoride, polyhexafluoropropylene, polyperfluoroalkylvinyl ether, polyperfluoro sulfonylfluoride alkoxy vinyl ether, polyvinyl alcohol, cellulose acetate, or copolymers thereof.

The solvent may include, but is not limited to, an alcohol such as ethanol, isopropyl alcohol, n-propyl alcohol, butanol, and so on, water, dimethyl acetamide, dimethyl sulfoxide, N-methylpyrrolidone, and tetrahydrofuran. The coating method may include, but is not limited to, screen printing, spray coating, doctor blade methods, gravure coating, dip coating, silk screening, painting, and so on, depending on the viscosity of the composition.

A polymer electrolyte membrane 1 makes ions exchanged by transferring protons produced at the anode catalyst layer 33 to the cathode catalyst layer 53, and may include a polymer with excellent ion conductivity.

The proton conductive polymer for the polymer electrolyte membrane 1 of the present invention may be any polymer resin having a cation exchange group selected from the group consisting of a sulfonic acid group, a carboxylic acid group, a phosphoric acid group, a phosphonic acid group, and derivatives thereof at its side chain.

Non-limiting examples of the polymer resin include at least one proton conductive polymer selected from the group consisting of fluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers, and polyphenylquinoxaline-based polymers. In one embodiment, the proton conductive polymer is at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), and poly(2,5-benzimidazole).

The H can be replaced with Na, K, Li, Cs, or tetrabutylammonium in a proton conductive group of the proton conductive polymer. When Na is substituted for H in an ion exchange group at the terminal end of the proton conductive group, NaOH is used. When the H is replaced with tetrabutylammonium, tributylammonium hydroxide is used. K, Li, or Cs can also be substituted for H by using appropriate compounds. A method of substituting another material for H is known in this related art, and is therefore not further described in detail.

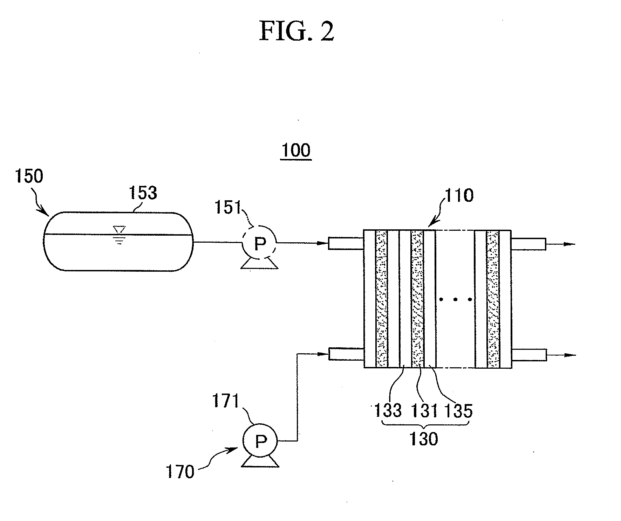

FIGURE 2 shows a schematic structure of a fuel cell system 100 that will be described in detail with reference to this accompanying drawing as follows. FIGURE 2 illustrates a fuel cell system, in which a fuel and an oxidant are provided to the electricity generating element 130 through pumps 151 and 171. However, the present invention is not limited to this structure, and may include an alternative structure, in which a fuel and an oxidant are provided in a diffusion manner.

The fuel cell system 100 includes a stack 110 composed of at least one electricity generating element 130 that generates electrical energy through an electrochemical reaction of a fuel and an oxidant, a fuel supplier 150 for supplying the fuel to the electricity generating element 130, and an oxidant supplier 170 for supplying the oxidant to the electricity generating element 130.

In addition, the fuel supplier 150 is equipped with a tank 153, which stores fuel, and the fuel pump 151, which is connected therewith. The fuel pump 151 supplies a fuel stored in the tank 153 to the stack 110 with a predetermined pumping power.

The oxidant supplier 170, which supplies the oxidant to the electricity generating element 130 of the stack 110, is equipped with at least one pump 171 for supplying an oxidant with a predetermined pumping power.

The electricity generating element 130 includes a membrane-electrode assembly 131, which oxidizes hydrogen or a fuel and reduces an oxidant, and separators 133 and 135 that are respectively positioned at opposite sides of the membrane-electrode assembly and supply hydrogen or a fuel, and an oxidant, respectively. At least one electricity generating element 130 is included in a stack 110.

The following examples illustrate the present invention in more detail. However, it is understood that the present invention is not limited by these examples.

### Preparation of a Catalyst

### Example 1

3.1 g of Pd nitrate and 1.2 g of Co nitrate were added to 10ml of water to prepare a precursor solution. Then, 30 cc of hydrazine was added to the precursor solution for reduction. The reduced precursor solution was agitated for 24 hours at room temperature. Then, the solvent was evaporated from the reduced precursor solution at the same room temperature to prepare a powder. The powder was vacuum-dried at 120 °C for 3 hours.

The dried powder was fired at 200 °C under a hydrogen atmosphere, to produce a PdCo catalyst.

The PdCo catalyst included Pd and Co in an atomic ratio of 70:30 and had a particle diameter ranging from 15 to 20 nm.

### Example 2

A PdMn catalyst was prepared according to the same method as in Example 1 except for using Mn nitrate instead of Co nitrate.

### Example 3

A PdCu catalyst was prepared according to the same method as in Example 1 except for using Cu nitrate instead of Co nitrate.

### Example 4

A PdFe catalyst was prepared according to the same method as in Example 1 except for using Fe nitrate instead of Co nitrate.

### Comparative Example 1

A Pt/C catalyst supported on a carbon carrier (JM Co.) was used instead of PdCo catalyst. It included 40 wt% of Pt and 60 wt% of C.

### Comparative Example 2

2.4 g of Pd chloride and 1.2 g of Co nitrate were added to 40 ml of water, preparing a precursor solution. The precursor solution was mixed for 24 hours at room temperature and then heated to 90 °C to evaporate water, preparing a powder. The powder was calcinated at 200 °C for 3 hours under a hydrogen atmosphere for reduction, to produce a PdCo catalyst.

The PdCo catalyst included Pd and Co in an atomic ratio of 70:30 and with a particle diameter ranging from 15 to 20 nm.

Measurement of average distance between atoms of the prepared catalysts

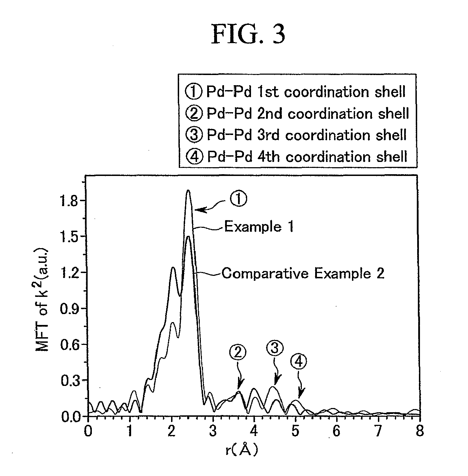

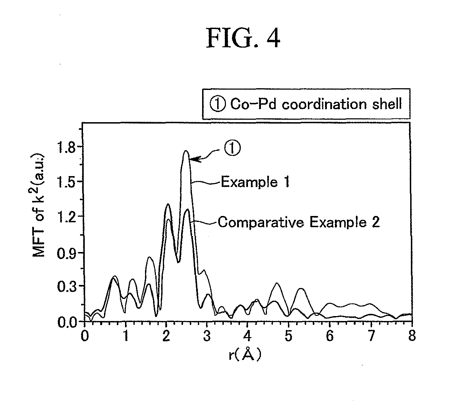

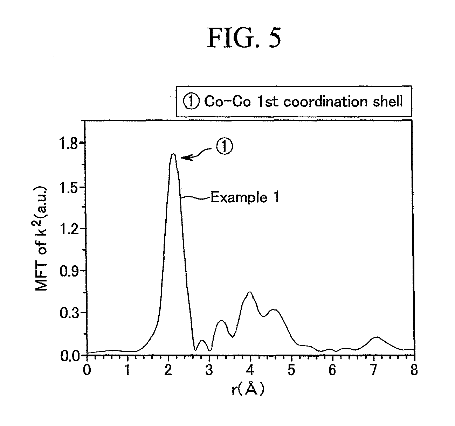

The catalysts, made according to the processes of Examples 1 to 4 and Comparative Examples 1 and 2, were examined to measure extended x-ray absorption fine structure (EXAFS) data in the Pohang Accelerator Research Center. The EXAFS data were Fourier-transformed to gain a modulus of a Fourier transform (MFT) graph. The MFT graph was fitted by the least-squares method. Then, the average distance between atoms of the catalysts of Examples 1 to 4 and Comparative Examples 1 and 2 was calculated based on the fitted MFT graph. FIGURES 3 to 5 show the MFT graphs of the catalysts of Example 1 and Comparative Example 2. In addition, Table 1 shows the average distance between atoms of the catalysts of Example 1 and Comparative Example 2.

**Table 1**

| | Average distance between Pd atoms (Å) | Average distance between Pd and Co atoms (Å) | Average distance between Co atoms (Å) |
|---|---|---|---|
| Example 1 | 2.724 | 2.656 | 2.658 |
| Comparative Example 2 | 2.712 | 2.618 | 2.566 |

### Fabrication of a cell and Measurement of current density

Oxygen gas was bubbled into a sulfuric acid solution of a 0.5M concentration for 2 hours to prepare an oxygen-saturated sulfuric acid solution. Then, each catalyst of Examples 1 to 4 and Comparative Examples 1 and 2 was loaded at 3.78×10⁻³ mg on a glassy carbon to prepare a working electrode, while a platinum mesh was prepared as a counterpart electrode. Both of the electrodes were put in the oxygen-saturated sulfuric acid solution, and thereafter current densities of the catalysts while changing voltage were measured. The measurement results of the catalysts of Example 1 and Comparative Examples 1 and 2 are provided in the following Table 2.

**Table 2**

| | Current density (mA/cm²) |
|---|---|
| Example 1 | 1.95 |
| Comparative Example 1 | 1.41 |
| Comparative Example 2 | 0.79 |

Referring to Table 2, the cathode catalyst for a fuel cell of Example 1 had higher current density than those of Comparative Examples 1 and 2.

In addition, a fuel cell including the catalyst of Examples 2 to 4 had similar current density to that of Example 1.

While this invention has been described in connection with certain exemplary embodiments thereof, it is to be understood that the invention is not limited to the disclosed embodiments, but also includes various modifications and equivalent arrangements included within the scope of the appended claims.

## Claims

1. A cathode catalyst for a fuel cell, comprising:
PdM where M is a metal selected from the group consisting of Mn, Fe, Co, Cu, and combinations thereof, wherein an average distance between the Pd atoms ranges from 2.72 Å to 2.73 Å, an average distance between the Pd and M atoms ranges from 2.63 Å to 2.67 Å, and an average distance between the M atoms ranges from 2.63 Å to 2.67 Å.

2. The cathode catalyst of claim 1, wherein:
(a) the average distance between the Pd atoms ranges from 2.723 Å to 2.727 Å: and/or
(b) the average distance between the Pd and M atoms ranges from 2.64 Å to 2.66 Å; and/or:
(c) the average distance between the M atoms ranges from 2.64 Å to 2.66 Å.

3. The cathode catalyst of claim of claims 1 or 2, wherein the atomic ratio of the Pd to the M ranges from 5 to 95 through 95 to 5, or the atomic ratio of the Pd to the M ranges from 20 to 80 through 75 to 25.

4. The cathode catalyst of claim of claim 3, wherein the PdM is not supported on a carrier.

5. The cathode catalyst of any one of claims 1 to 4, wherein the PdM has a nano-sized particle diameter, the PdM has a particle diameter of 1 nm to 20 nm, or the PdM has a particle diameter of 1 nm to 5 nm.

6. A method of preparing a cathode catalyst for a fuel cell, comprising:
preparing a precursor solution by adding a Pd precursor and a M precursor to a solvent, where the M precursor includes a metal selected from the group consisting of a Mn precursor, a Fe precursor, a Co precursor, a Cu precursor, and combinations thereof;
reducing the precursor solution by adding a reducing agent thereto;
preparing a powder by evaporating the solvent from the reduced precursor solution;
drying the powder; and
firing the powder.

7. The method of claim 6, wherein:
(a) the Pd precursor is selected from the group consisting of Pd nitrate, a Pd halide, Pd acetate, hydrates thereof, and combinations thereof; and/or
(b) the Mn precursor is selected from the group consisting of Mn nitrate, a Mn halide, Mn acetate, hydrates thereof, and combinations thereof; and/or
(c) the Fe precursor is selected from the group consisting of Fe nitrate, a Fe halide, Fe acetate, hydrates thereof, and combinations thereof; and/or
(d) the Co precursor is selected from the group consisting of Co nitrate, a Co halide, Co acetate, hydrates thereof, and combinations thereof: and/or
(e) the Cu precursor is selected from the group consisting of Cu nitrate, a Cu halide, Cu acetate, hydrates thereof, and combinations thereof.

8. The method of claims 6 or 7, wherein the solvent is selected from the group consisting of water, methanol, ethanol, acetone, and combinations thereof.

9. The method of claims 6, 7 or 8, wherein the reducing agent is selected from the group consisting of hydrazine, sodium borohydride, dimethylamine boride, diethylamine boride, sodium hypophosphite, and combinations thereof.

10. The method of any one of claims 6 to 9, wherein the evaporation of the solvent from the reduced precursor solution is performed at a temperature ranging from 0 °C to 30 °C.

11. The method of any one of claims 6 to 10, wherein the powder is dried at a temperature ranging from 80 °C to 150 °C.

12. The method of any one of claims 6 to 11, wherein the powder is fired at a temperature ranging from 150 °C to 250 °C.

13. The method of any one of claims 6 to 12, wherein the powder is fired for 2 hours to 5 hours.

14. A membrane-electrode assembly for a fuel cell, comprising:
an anode and a cathode; and
a polymer electrolyte membrane interposed between the anode and cathode, the cathode including a cathode catalyst that comprises:
PdM where M is a metal selected from the group consisting of Mn, Fe, Co, Cu, and combinations thereof, wherein an average distance between the Pd atoms ranges from 2.72 Å to 2.73 Å, an average distance between the Pd and M atoms ranges from 2.63 Å to 2.67 Å, and an average distance between the M atoms ranges from 2.63 Å to 2.67 Å.

15. A fuel cell system comprising:
an electricity generating element comprising a membrane-electrode assembly that comprises:
an anode and a cathode; and
a polymer electrolyte membrane interposed between the anode and cathode, the cathode including a cathode catalyst that comprises PdM where M is a metal selected from the group consisting of Mn, Fe, Co, Cu, and combinations thereof, wherein an average distance between the Pd atoms ranges from 2.72 Å to 2.73 Å, an average distance between the Pd and M atoms ranges from 2.63 Å to 2.67 Å, and an average distance between the M atoms ranges from 2.63 Å to 2.67 Å;
a fuel supplier that supplies the electricity generating element with a fuel; and
an oxidant supplier that supplies the electricity generating element with an oxidant.
